Europäisches Patentamt

(19) European Patent Office

Office européen des brevets

(11) Numéro de publication: **0 101 340**
**B1**

(12) **FASCICULE DE BREVET EUROPEEN**

(45) Date de publication du fascicule du brevet:
**17.11.88**

(21) Numéro de dépôt: **83401351.8**

(22) Date de dépôt: **30.06.83**

(51) Int. Cl.⁴: **F 16 L 55/16,** F 16 L 58/10,
B 32 B 7/00

(54) **Matériaux composites et gaines de garnissage intérieur pour conduites réalisées en ces matériaux.**

(30) Priorité: **21.07.82 FR 8212732**
**30.05.83 FR 8308918**

(43) Date de publication de la demande:
**22.02.84 Bulletin 84/8**

(45) Mention de la délivrance du brevet:
**17.11.88 Bulletin 88/46**

(84) Etats contractants désignés:
**DE SE**

(56) Documents cités:
**FR - A - 664 743**
**FR - A - 1 464 557**
**FR - A - 2 441 788**
**GB - A - 1 340 068**
**GB - A - 1 512 035**
**GB - A - 1 569 675**

(73) Titulaire: **Société COOPETANCHE, Rue du Bois**
**Raffeteau, F-77181 Courtry (FR)**

(72) Inventeur: **Renaud, Alain, 18, Sente du Pin,**
**F-93370 Montfermeil (FR)**

(74) Mandataire: **Morash, Daniel, 17, Avenue La Bruyère,**
**F-78160 Marly-le-Roi (FR)**

## Description

La présente invention concerne une matière composite intégrale souple constituée par au moins un ensemble comprenant une couche en un tissu non tissé et une armature souple disposée sous ledit tissu non tissé, pouvant notamment servir pour la réalisation de gaines de garnissage intérieur pour conduites avariées, par exemple. Cette invention concerne également une gaine de manchonnage ainsi qu'un procédé de garnissage intérieur d'une conduite au moyen d'une gaine réalisée dans ladite matière composite.

On connaît une matière composite intégrale souple pour la fabrication des chapeaux de feutre en laine du brevet français 664 743 qui comprend, intercalé dans l'épaisseur du feutre un «réseau» en un tissu tissé, ce réseau pouvant être assimilé à une armature. La matière décrite dans ce brevet français comporte donc une couche en feutre et une armature noyée dans l'épaisseur de cette couche, les faces extérieure et intérieure de cette matière étant toujours celles d'un feutre, même si plusieurs ensembles sont assemblés. La matière, selon ce brevet français, est mise en forme par foulage uniquement.

Ces matières, pour pouvoir être utilisées comme gaines de garnissage intérieur de conduite avariée, ne sont donc pourvues que d'une seule armature de renfort, ce qui est souvent insuffisant. Ainsi, pour des conduites de diamètres importants, même en superposant plusieurs matières, l'épaisseur de la gaine deviendrait considérable pour avoir la résistance nécessaire à la fissuration et éventuelle rupture. En outre, cette matière composite doit, pour pouvoir être utilisée pour une gaine de garnissage de conduite, comporter une couche ou similaire extérieure capable d'absorber un adhésif, la face extérieure de cette couche étant appliquée contre la face intérieure de la conduite jusqu'au durcissement de cet adhésif; la conduite étant alors pourvue d'une gaine protectrice. Or, l'épaisseur de la gaine augmentant nécessairement en fonction de la section de la conduite à garnir, l'épaisseur de la couche absorbante extérieure augmente également et, par conséquent, la quantité d'adhésif à fournir pour assurer l'adhésion de la gaine à la conduite croît non seulement en fonction de la surface extérieure de la gaine (donc de la section de la conduite), mais encore, de façon démesurée, en fonction de l'épaisseur de la couche absorbant l'adhésif de la gaine. Ainsi la gaine devient excessivement lourde, les pressions d'application de la gaine contre la conduite deviennent de plus en plus importantes, ce qui rend très difficile l'introduction de la gaine dans la conduite, son application contre la face intérieure de la conduite et le maintien de la pression d'application jusqu'au durcissement de l'adhésif. Enfin, le coût de l'équipement et de l'opération de garnissage deviennent excessifs.

La matière décrite dans le brevet français 664 743 ne possède pas les qualités nécessaires pour pouvoir être utilisée pour la fabrication de gaines de garnissage.

On connaît également le certificat d'addition no 78 3204 (No de publication 2 441 788) au brevet français 7 810 017 qui concerne un procédé de garnissage d'une conduite dans lequel la jonction définitive des bords longitudinaux de la gaine de manchonnage est effectuée par les moyens connus de collage ou soudage. Cette gaine ne peut donc pas agrandir sa section pendant son application contre la face intérieure de la conduite pour la conformer à la section de la conduite sans que la matière composite constitutive de ladite gaine subisse une déformation élastique et/ou plastique.

La présente invention a pour objet de pallier ces inconvénients. Conformément à la présente invention, la matière composite intégrale souple constituée par au moins un ensemble comprenant une couche en un tissu non tissé et une armature souple disposée sous ledit tissu non tissé est caractérisée en ce qu'un deuxième tissu non tissé est disposé sur la face inférieure de ladite armature du dernier ensemble et en ce qu'une feuille souple et étanche ayant une face extérieure sensiblement lisse est reliée fixe à la face inférieure dudit deuxième tissu non tissé.

Ledit premier tissu non tissé peut être le même que ledit deuxième tissu non tissé.

Les tissus non tissés peuvent être réalisés en fibres naturelles ou synthétiques.

L'armature peut être réalisée sous forme d'une tissu non tissé ou d'un grillage.

La chaîne dudit grillage peut avoir des dimensions supérieures à celles de la trame.

Un ensemble: premier tissu non tissé – armature, et ledit deuxième tissu, sont perméables à une résine thermodurcissable.

La présente invention concerne aussi les gaines de manchonnage intérieur d'une conduite réalisées avec une matière composite intégrale souple telle que décrite ci-dessus.

Enfin, l'invention concerne un procédé de garnissage intérieur d'une conduite réalisé avec une gaine telle que précisée ci-dessus, caractérisée en ce que l'on enduit la face intérieure de la conduite et/ou la deuxième couche pourvue d'une armature avec un matériau adhésif, tel qu'une résine thermodurcissable; en ce que l'on applique, par la suite, la gaine contre la face intérieure de la conduite en exerçant une pression sur la face intérieure de la gaine tout en augmentant, éventuellement, la température à l'intérieur de la gaine jusqu'au durcissement de l'adhésif et en ce que l'on réduit alors ladite pression d'application de la gaine sur la conduite.

D'autres avantages et caractéristiques ressortiront du texte suivant, donné à titre d'exemple, et des figures y afférentes.

La figure 1 montre, en coupe et agrandi, un premier mode de réalisation de la matière composite.

La figure 2 montre, en coupe et agrandi, un deuxième mode de réalisation de la matière composite.

La figure 3 montre, en coupe, à petite échelle, une gaine réalisée avec la matiére montrée dans la figure 1.

La figure 4 montre, en coupe, à petite échelle, l'installation d'une gaine réalisée avec une matière montrée dans la figure 2 dans une conduite.

La figure 5 montre, en coupe, un quatrième mode de réalisation de la matière composite.

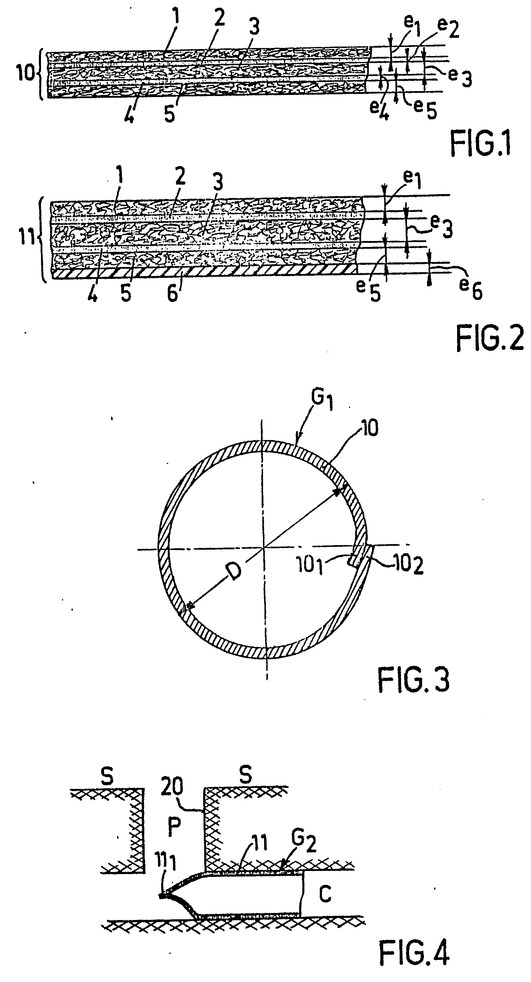

La matière (10) montrée dans la figure 1 comporte au moins un ensemble comprenant une première couche (1) en un tissu non tissé, tel que le feutre naturel ou artificiel. De préférence, cette couche (1) est réalisée en fibres de polyester. Cette couche (1) est suivie d'au moins une armature (2) souple et résistante, par exemple en tissu de fibres de verre ou en un grillage en fibres de verre. Plusieurs armatures (2) peuvent être disposées l'une sur l'autre: par exemple, une armature en tissu peut être combinée avec une armature ayant la configuration d'un grillage, etc. . . Si le matériau ne comporte qu'un seul ensemble (1, 2), une couche (3) en un tissu non tissé est reliée fixe à la face inférieure de la couche (2) comportant au moins une armature. L'épaisseur ($e_i$) de la couche (1) peut, dans ce cas, être égale à celle ($e_3$) de la couche (3); toutefois, ceci n'est pas obligatoire: les épaisseurs ($e_1$) et ($e_3$) peuvent être choisies de façon à permettre la réalisation la plus avantageuse d'une matière (10) pour l'exécution d'une gaine ($G_1$) par exemple. De même, l'épaisseur ($e_1$) de la couche comportant au moins une armature est choisie en fonction du nombre des armatures utilisées et de la souplesse et de la résistance mécanique que l'on veut conférer à la matière (10) devant servir pour réaliser une gaine ($G_1$). La matière (10) peut comporter plusieurs ensembles: couche en tissu non tissé – couche armatures. L'exemple montré dans la figure 1 comporte deux ensembles: couche (1, 2) et couches (3, 4); toutefois, la dernière couche (5) est, de préférence, en un tissu non tissé; elle est reliée fixe à la partie inférieure de la dernière couche comportant au moins une armature.

Les épaisseurs des couches en tissu non tissé ($e_1$), ($e_3$), ($e_5$) et les épaisseurs des couches – armatures ($e_2$), ($e_4$) sont choisies de façon à conférer les meilleures qualités possibles pour la constitution d'une gaine ($G_1$), par exemple. Ainsi, peut-on admettre pour la matière (10) montrée, à titre d'exemple dans la figure 1, que $e_1 = e_5$, que $e_3 > e_1$, et que $e_2 = e_4$. Le mode d'assemblage des couches les unes sur les autres ne fait pas partie de l'invention. On peut, toutefois, par exemple, imaginer qu'une matière intégrale et résistante peut être obtenue par projection des fibres de polyester sur le tissu en fibres de verre. Toutes les couches (1, 2, 3, 4, 5) sont perméables à un adhésif tel qu'une résine thermodurcissable. On obtient ainsi une matière (10) intégrale légère, facilement maniable et résistante. Ces qualités permettent l'utilisation avantageuse de cette matière (10) pour la réalisation de gaines ($G_1$) de garnissage intérieur pour conduites. Une feuille de la matière (10) est roulée pour constituer un élément tubulaire dont le diamètre extérieur (D) est légèrement inférieur au diamètre intérieur de la conduite. Les extrémités ($10_1$, $10_2$) de la feuille réalisée dans la matière (10) forment un joint à recouvrement, ce qui facilite la détermination du diamètre (D) le plus avantageux pour l'introduction de la gaine ($G_1$) dans la conduite (Voir Fig. 3). Avant son introduction dans la conduite, la gaine est enduite avec l'adhésif qui pénètre toutes les couches de la matière (10). Les extrémités ($10_1$, $10_2$) de la feuille peuvent alors glisser l'une par rapport à l'autre aussi longtemps que l'adhésif reste liquide.

Lorsque la gaine ($G_1$) enduite d'adhésif est introduite dans la conduite, on introduit dans la gaine également un sac ou similaire ayant au moins la longueur de la gaine. Ce sac est réalisé en une feuille de polyéthylène, polychlorure de vinyle ou similaire. Cette feuille ne peut donc pas adhérer à la gaine par l'action de l'adhésif. Le sac est gonflé; la température est, éventuellement, augmentée. La feuille en polyéthylène, polychlorure de vinyle ou similaire est alors appliquée fermement contre la face inférieure de la gaine (la couche 3 ou la couche 5) et la gaine ($G_1$) est appliquée fermement contre la face intérieure de la conduite. La feuille constituant le sac gonflable étant lisse, l'adhésif ne peut pas s'écouler sur la face inférieure de la gaine (couche 3 ou couche 5) et celle-ci reste lisse et étanche après le durcissement de l'adhésif et après que le sac aura été dégonflé et retiré. Lors de l'application sous pression de la gaine contre la conduite, le diamètre (D) de la gaine ($G_1$) augmente sans que le matériau (10) soit soumis à des efforts. Ceci est rendu possible par le glissement des extrémités ($10_1$), ($10_2$) du joint à recouvrement l'une par rapport à l'autre avant le durcissement de l'adhésif.

Après durcissement de l'adhésif, le diamètre (D) correspondant alors sensiblement au diamètre intérieur de la conduite, la matière (10) imprégnée de résine polymérisée et dure permet la constitution d'une gaine ($G_1$) légère, résistante et étanche et dont la face intérieure est lisse.

La matière (11) montrée dans la figure 2 est similaire à celle montrée dans la figure 1 sauf qu'elle comprend comme couche inférieure une feuille souple et étanche (6) reliée fixe à la couche (5) en tissu non tissè. Cette feuille (6) peut être en polyéthylène, polychlorure de vinyle, etc. . . , comme c'est déjà connu de la demande de brevet no 8 200 933 du 21 janvier 1982, au nom de la demanderesse. Cette matière (11) peut servir pour constituer des gaines ($G_2$) de garnissage intérieur pour conduites (C) (voir figure 4). Au moins l'une des extrémités de la gaine ($G_2$) est prolongée dans le fond du puits (P) d'accès à la conduite du sol (S) de façon à dépasser l'extrémité de la conduite (C). Les bords de l'extrémité de la gaine ($G_2$) sont alors pressés l'un contre l'autre et joints par soudage, par exemple. L'étanchéité de la gaine ($G_2$) à l'une de ses extrémités est ainsi assurée. Les couches (1, 2, 3, 4, 5) de la matière (11) constituant la gaine ($G_1$) sont imprégnées d'un adhésif tel qu'une résine thermodurcissable. L'adhésif ne peut pas pénétrer dans la couche (6), ni passer à travers la couche (6). La gaine ($G_2$)

étant ainsi préparée et introduite dans la conduite (C), un fluide sous pression et, éventuellement, chauffé agit directement ou indirectement sur la face intérieure de la gaine ($G_2$). Celle-ci est appliquée fermement par sa face extérieure sur la face intérieure de la conduite (C) jusqu'au durcissement de l'adhésif. La partie de la gaine ($G_2$), dont les bords sont soudés, qui dépasse l'extrémité de la conduite (C) est coupée au ras de la paroi (20) du puits (P), par exemple. La gaine ($G_2$) est en place.

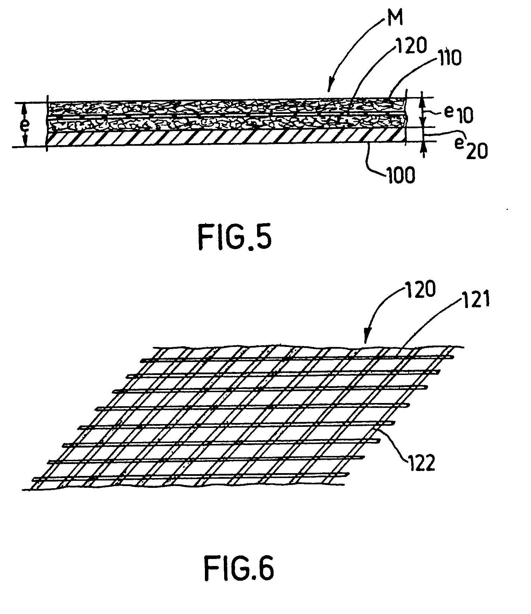

La figure 4 montre, en coupe, un mode de réalisation de la matière conforme à l'invention, et la figure 5 montre, en perspective, à une plus grande échelle, un mode de réalisation d'une armature de renfort de la matière conforme à l'invention.

La matière (M) montrée dans la figure 5 a une épaisseur égale à (e) et comporte une première couche (100) pouvant être constituée par une feuille souple et étanche en un matériau naturel ou synthétique, tel que le caoutchouc, butyle, polychlorure de vinyle, plyéthylène, etc.. , L'épaisseur de la couche (100) est égale à ($e_{20}$).

Dans le cas d'une gaine de garnissage intérieur de conduite, cette feuille (100) constitue la couche intérieure de la matière composite; sa face inférieure libre est donc, de préférence, lisse pour diminuer, autant que possible, le frottement entre le fluide s'écoulant dans le conduit et le garnissage. Une deuxième couche (110) ayant une épaisseur ($e_{10}$) est fixée sur la première couche (100). Cette deuxième couche (110) est constituée par un feutre naturel ou synthétique pourvu d'une armature (120) souple disposée sensiblement à mi-épaisseur ($e_{10/2}$) de cette couche. Le feutre est constitué par des fibres en coton, par exemple, ou de préférence, par des fibres en polyester qui sont, par exemple, floquées ou appliquées sous pression à chaud (par calandrage par exemple) sur la face supérieure de la feuille (ou couche) (100), l'armature (120) étant mise en place préalablement au floquage ou calandrage à chaud, par exemple. Le mode de fabrication de la matière (M) ne faisant pas partie de l'invention n'est pas décrit. Ce feutre est destiné à absorber et retenir un adhésif lors de l'application sous pression de la gaine de garnissage contre la face intérieure de la conduite; il est, dans le cadre de l'invention, que l'adhésif peut être appliqué sur la couche (110), sur la face intérieure de la conduite ou sur les deux (couche et conduite). L'armature (120) est, de préférence, mais non exclusivement constituée par une grille en fribres de verre, par exemple. La grille montrée dans la figure 6 a des chaînes (122) et des trames (121) disposées perpendiculairement les unes par rapport aux autres. Les chaînes (122) peuvent avoir des dimensions supérieures à celles des trames (121), par exemple. Selon un mode de réalisation de la gaine, les chaînes (122) sont disposées dans le sens de l'axe longitudinal de la gaine. Mais on peut aussi noyer l'armature (120) dans la couche (110) de façon à ce que, lors de la fabrication de la matière (M), les trames (121) soient disposées dans le sens de l'axe longitudinal de la gaine formée dans ladite matière (M).

Selon un autre mode de réalisation, les chaînes (122) et trames (121) de l'armature (120) peuvent être disposées diagonalement par rapport à l'axe longitudinal de la gaine.

Comme déjà mentionné ci-dessus, l'armature (120) confère une résistance accrue à l'ensemble de la matière (M) dont l'épaisseur (e) totale variera seulement dans des proportions comparativement faibles en fonction de l'augmentation du diamètre (ou de la section) de la conduite devant être pourvue d'une gaine de garnissage intérieur formée dans ladite matière (M). Egalement, la quantité d'adhésif n'augmentera que d'une quantité comparativement faible, étant donné que l'épaisseur ($e_{10}$) de la couche (110) ne croîtra que de peu. Le poids total de la gaine de garnissage comprenant l'adhésif reste toujours comparativement faible; par conséquent, la pression nécessaire pour appliquer la gaine contre la face intérieure de la conduite ne croît que faiblement en fonction des diamètres (ou de la section) de la conduite. Il y a donc un gain d'énergie par rapport aux procédés de garnissage connus; la consommation d'adhésif est plus faible que dans les procédés connus; et la quantité de matière (M) est inférieure à celle nécessaire dans des procédés pratiqués jusqu'à présent. Egalement, l'équipement pour créer la pression d'application de la gaine contre la conduite et pour appliquer l'adhésif peut être plus léger que celui utilisé sur les chantiers existants. Il y a donc un gain d'énergie, de la quantité des matériaux, et une réduction du coût du procédé.

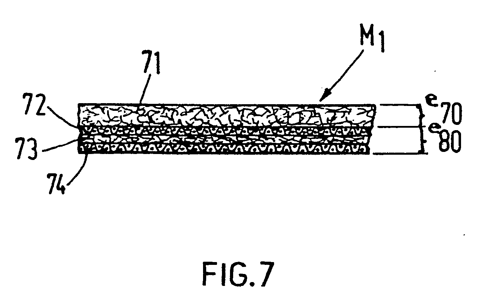

La matière ($M_1$), selon ledit quatrième mode de réalisation, montrée dans la figure 7 comporte une première couche ($e_{10}$) en un premier tissu non tissé (71), tel qu'un feutre, par exemple. Ce tissu non tissé (71) peut être réalisé en fibres de polyester, par exemple; mais d'autres fibres naturelles ou artificielles peuvent être utilisées. Cette couche ($e_{70}$) est suivie d'au moins une deuxième couche ($e_{80}$) comprenant une première armature (72), une deuxième tissu non tissé (73) et une deuxième armature (74). La première armature (72) et/ou la deuxième armature (74) sont réalisées en un tissu tissé ou un grillage en fibres de verre; ledit deuxième tissu non tissé disposé entre les deux armatures (72) et (74) est réalisé avantageusement en fibres de verre ou mat de verre. L'épaisseur de la couche ($e_{70}$) en un premier tissu non tissé (71) est, en général, supérieure à l'épaisseur de chacune des armatures (72, 74) et du tissu non tissé (73) en mat de verre; les épaisseurs des armatures (72, 74) peuvent être égales ou différentes; en général, l'épaisseur de chacune des armatures (72, 74) est supérieure ou au maximum égale à l'épaisseur du tissu non tissé (73) en mat de verre.

Selon un autre mode de réalisation, la matière ($M_1$) peut être constituée uniquement par la couche ($e_{80}$) comprenant ladite première armature (72), un tissu non tissé (73) et une deuxième armature (74) (non montrés dans les dessins). Les armatures (72, 74) sont réalisées, par exemple, en un tissu tissé en fibres de verre et le tissu non tissé (73) en fibres de verre ou mat de verre. Les épaisseurs des armatures (72, 74) et du tissu non tissé (73) peuvent être égales ou différentes.

Selon encore un autre mode de réalisation, la matière (M₁) est constituée uniquement par deux armatures (72, 74) en un tissu tissé en fibres de verre, par exemple.

La matière composite ainsi obtenue a une épaisseur totale très faible, mais une résistance mécanique et une résistance contre l'érosion extrêmement élevée. La matière résiste également à toutes corrosions.

Cette matière peut être avantageusement utilisée pour la réalisation des gaines de garnissage intérieur pour conduites de toutes formes et pouvant avoir des longueurs considérables, et des sections très faibles (par exemple des sections circulaires ayant un diamètre de 80 m/m environ) jusqu'à des sections très importantes (par exemple des sections circulaires ayant un diamètre de 3000 m/m environ). Les gaines sont réalisées de façon à ce que le tissu non tissé (71) ou ladite première armature (72) constitue la couche extérieure de la gaine, tandis que l'armature (74) en un tissu tissé en fibres de verre – dans le cas d'une seule couche (e₈₀), par exemple – constitue la face intérieure de la gaine toutes les couches peuvent absorber un matériau adhésif tel qu'une résine thermodurcissable. Les bords de la gaine, lors de sa constitution, sont joints par l'intermédiaire d'un joint expansible, ou encore par soudage ou par couture. En général, les gaines sont préparées à l'atelier et transportées sur le chantier où – après avoir été enduites avec une résine thermodurcissable soit à l'atelier, soit sur le site du travail – elles sont introduites dans la conduite. Un moule gonflable réalisé en un matériau qui n'adhère pas à la gaine enduite avec ladite résine est introduit dans la gaine soit à l'atelier, soir sur le chantier avant l'introduction de la gaine dans la conduite, soit encore dans la gaine après que celle-ci soit introduite dans la conduite. Le moule est alors gonflé et, éventuellement, chauffé au moyen de dispositifs de chauffage pouvant être incorporés ou montrés dans ledit moule, ou encore par l'introduction d'un fluide chaud dans le moule. La gaine est ainsi appliquée contre la face intérieure de la conduite et maintenue en position jusqu'au durcissement (la polymérisation) de la résine. La gaine étant en place, le moule est dégonflé et retiré.

De nombreuses améliorations et modifications peuvent être apportées sans pour autant sortir du cadre de l'invention. L'armature peut, par exemple, avoir une configuration différente de celle d'une grille, l'épaisseur de la couche absorbante peut être très faible et la feuille souple et étanche peut être réalisée sous forme d'une membrane mince. Il est également dans le cadre de l'invention d'utiliser la matière conforme à l'invention pour la réalisation des gaines ayant des sections carrées, octogonales, ovales, etc. . . pour être appliquées contre des conduites ayant les mêmes sections.

## Revendications

1. Matière composite intégrale souple constituée par au moins un ensemble comprenant une couche en un tissu non tissé et une armature souple disposée sous ledit tissu non tissé, caractérisée en ce qu'un deuxième tissu non tissé (3, 5, 110, 74) est disposé sur la face inférieure de ladite armature (2, 4, 120, 73) dudit ensemble et en ce qu'une feuille souple et étanche (6, 100) ayant une face extérieure sensiblement lisse est reliée fixe à la face inférieure dudit deuxième tissu (3, 5, 110, 74) non tissé.

2. Matière selon la revendication 1, caractérisée en ce que ledit premier tissu non tissé (1, 3, 110, 72) est le même que ledit deuxième tissu non tissé.

3. Matière selon l'une des revendications précédentes, caractérisée en ce que les tissus non tissés sont réalisés en fibres naturelles ou synthétiques.

4. Matière selon l'une des revendications précédentes, caractérisée en ce que l'armature est réalisée sous forme d'un tissu non tissé ou d'un grillage (120).

5. Matière selon la revendication 4, caractérisée en ce que la chaîne (122) dudit grillage a des dimensions supérieures à celles de la trame (121).

6. Matière selon l'une des revendications précédentes, caractérisée en ce qu'un ensemble: premier tissu non tissé – armature, et ledit deuxième tissu, sont perméables à une résine thermodurcissable.

7. Gaine de manchonnage intérieur d'une conduite, caractérisée en ce qu'elle est réalisée avec une matière composite intégrale souple (10, 11, M, M₁) telle que revendiquée dans les revendications 1 à 6.

8. Procédé de garnissage intérieur d'une conduite réalisé avec une gaine de manchonnage intérieur telle que revendiquée dans la revendication 7, caractérisée en ce que l'on enduit la face intérieure de la conduite et/ou la deuxième couche pourvue d'une armature avec un matériau adhésif, tel qu'une résine thermodurcissable; en ce que l'on applique, par la suite, la gaine contre la face intérieure de la conduite en exerçant une pression sur la face intérieure de la gaine tout en augmentant, éventuellement, la température à l'intérieur de la gaine jusqu'au durcissement de l'adhésif et en ce que l'on réduit alors ladite pression d'application de la gaine sur la conduite.

## Claims

1. Composite integral flexible material consisting of at least one arrangement comprising a layer of a non-woven fabric or tissue and a flexible reinforcement arranged under said non-woven fabric, characterized in that a second non-woven fabric (3, 5, 110, 74) is arranged on the underside of said reinforcement (2, 4, 120, 73) of said arrangement and that a flexible and impervious foil respectively sheet (6, 100) with a substantially smooth surface is fixedly connected to the underside of said second non-woven fabric (3, 5, 110, 74).

2. Material according to claim 1, characterized in that said first non-woven fabric (1, 3, 110, 72) is the same as the second non-woven fabric.

3. Material according to one of the preceeding claims, characterized in that the non-woven fabrics are made from natural or synthetic fibres.

4. Material according to one of the preceeding claims, characterized in that the reinforcement is made in the form of a non-woven fabric or a grid (120).

5. Material according to claim 4, characterized in that the warp (122) of this grid has dimensions superior to those of the weft (121).

6. Material according to one of the preceeding claims, characterized in that an arrangement: first non-woven tissue respectively fabric-reinforcement and that second fabric or tissue are pervious with regard to a thermosettable resin.

7. Inner lining of a pipe, characterized in that it is made from a flexible integral material (10, 11, M, $M_1$), such as claimed in claims 1 to 6.

8. Method for the inner lining of a pipe, realized with an inner lining sleeve as claimed in claim 7, characterized in that the inner face of the pipe and/or the second layer provided with a reinforcement is coated with an adhesive material such as a thermo setting resin; that subsequently the sleeve is applied against the inner surface of the pipe by applying a pressure upon the inner face of the lining, simultaneously possibly increasing the temperature in the interior of the lining till the adhesive is hardened, respectively set and that then the application pressure of the lining on the pipe is reduced.

## Patentansprüche

1. Einteiliges nachgiebiges Verbundmaterial, bestehend aus wenigstens einer Anordnung, die umfasst: eine Lage aus einem nicht gewebten Gewebe bzw. Vliesstoff und einer Verstärkung, die unter diesem nicht gewebten Gewebe angeordnet ist, dadurch gekennzeichnet, dass ein zweites nicht gewebtes Gewebe bzw. ein zweiter Vliesstoff (3, 5, 110, 74) auf der Unterseite dieser Verstärkung (2, 4, 120, 73) der Anordnung vorgesehen ist und dass eine nachgiebige und dichte Folie (6, 100) über eine im wesentlichen glatte Aussenfläche verfügt, die fest mit der Unterseite des zweiten Vliesstoffes (3, 5, 110, 74) verbunden ist.

2. Verbundmaterial nach Anspruch 1, dadurch gekennzeichnet, dass dieser erste Vliesstoff (1, 3, 110, 72) der gleiche wie der zweite Vliesstoff ist.

3. Verbundmaterial nach einem der vorhergehenden Ansprüche, dadurch gekennzeichnet, dass die Vliesstoffe aus natürlichen oder synthetischen Fasern hergestellt sind.

4. Verbundmaterial nach einem der vorhergehenden Ansprüche, dadurch gekennzeichnet, dass die Verstärkung in Form eines Vliesstoffes oder eines Gitters (120) hergestellt ist.

5. Verbundmaterial nach Anspruch 4, dadurch gekennzeichnet, dass die Kette (122) dieses Gitters Abmessungen hat, die grösser als die des Schusses (121) sind.

6. Verbundmaterial nach einem der vorhergehenden Ansprüche, dadurch gekennzeichnet, dass eine aus Vliesstoff-Verstärkung und dem zweiten Gewebe bestehende Anordnung permeabel für ein hitzehärtbares Harz ist.

7. Innenhüllauskleidung für eine Leitung, dadurch gekennzeichnet, dass sie aus einem einteiligen nachgiebigen Verbundmaterial (10, 11, M, $M_1$) der in den Ansprüchen 1 bis 6 beanspruchten Art hergestellt ist.

8. Verfahren zur Innenauskleidung einer Leitung vermittels einer Innenhüllauskleidung gemäss Anspruch 7, dadurch gekennzeichnet, dass die Innenseite der Leitung und/oder die zweite mit einer Verstärkung versehene Schicht mit einem Klebstoff, beispielsweise einem hitzehärtbaren Harz, beschichtet wird; dass man anschliessend die Hülle gegen die Innenfläche der Leitung beaufschlagt, indem man auf die Innenseite der Leitung einen Druck ausübt, indem man gegebenenfalls die Temperatur im Inneren der Hülle bis zum Härten des Klebstoffs erhöht und dass man dann diesen Beaufschlagungsdruck der Hülle auf die Leitung vermindert.

FIG.1

FIG.2

FIG.3

FIG.4

FIG.5

FIG.6

FIG.7